# FASCICULE DE BREVET EUROPEEN

(11) **EP 1 029 439 B1**
(45) Date de publication et mention de la délivrance du brevet: **28.04.2004**
(21) Numéro de dépôt: 00440035.4
(22) Date de dépôt: 08.02.2000
(51) Int. Cl.: A01D 78/10

(54) **Machine de fenaison**
Heuwerbungsmaschine
Haymaking machine

(30) Priorité: 19.02.1999 FR 9902204
(43) Date de publication de la demande: 23.08.2000
(73) Titulaire: KUHN S.A., 67706 Saverne Cedex (FR)
(72) Inventeur: Klein, Georges, 67330 Griesbach-le-Bastberg (FR); Higel, Eric, 67117 Furdenheim (FR)
(74) Mandataire: Andres, Jean-Claude

(56) Documents cités:
- EP-A- 0 289 864
- EP-A- 0 291 810
- EP-A- 0 316 560
- EP-A- 0 834 247
- DE-A- 3 938 867
- DE-U- 8 602 563
- US-A- 3 511 319

## Description

La présente invention se rapporte à une machine de fenaison, notamment une faneuse, comportant un châssis pouvant être accouplé à un tracteur, lequel châssis se compose d'un tronçon central et de plusieurs tronçons latéraux qui sont articulés entre eux et qui portent des rotors montés sur des axes supports autour desquels ils peuvent être entraînés en rotation au moyen d'organes de transmission qui sont logés dans les tronçons du châssis, lesdits tronçons latéraux pouvant être transposés au moyen de vérins hydrauliques dans une position de travail dans laquelle ils sont sensiblement alignés et dans une position de transport dans laquelle ils sont repliés autour de leurs axes d'articulation, certains de ces tronçons latéraux se repliant et se dépliant librement autour de leurs axes d'articulation durant lesdites transpositions.

Sur une machine de ce genre, connue dans la demande de brevet EP-834 247, les tronçons latéraux situés aux deux extrémités du châssis pivotent librement, sous l'effet de leur propre poids, autour de leurs axes d'articulation lorsqu'ils passent en position repliée ou en position dépliée. Ces tronçons comportent au niveau de leurs axes d'articulation des dispositifs de freinage destinés à ralentir lesdits pivotements. Ceux-ci restent cependant relativement brusques.

De plus, lorsque ces tronçons arrivent dans la position finale au repliage et au dépliage, ils rencontrent avec une certaine force des butées destinées à limiter leurs déplacements. Cela provoque à chaque fois un choc qui est bruyant et qui peut provoquer une rapide usure des pièces sollicitées.

Le but de la présente invention est de proposer une machine telle que décrite dans l'introduction et qui ne comporte pas les inconvénients précités de la machine connue.

A cet effet, une importante caractéristique de l'invention consiste en ce que la machine est équipée au niveau des axes d'articulation entre les tronçons latéraux qui se replient ou se déplient librement, de dispositifs qui amortissent leurs déplacements autour desdits axes. Ces dispositifs sont constitués par un ou plusieurs ressorts agencés de manière à travailler à la traction et à la compression. Ils assurent une sorte de délestage des éléments qui pivotent et évitent ainsi les mouvements brusques de ces derniers dans les deux directions de déplacement. Ces dispositifs sont relativement simples. Ils peuvent également comporter des moyens qui limitent lesdits déplacements.

D'autres caractéristiques et avantages de l'invention ressortiront de la description ci-après d'exemples de réalisation non limitatifs de la machine selon l'invention, avec références aux dessins annexés dans lesquels :
- la figure 1 représente une vue de dessus d'une partie d'une machine selon l'invention en position de travail,
- la figure 2 représente une vue de derrière de la partie de la machine selon la figure 1,
- la figure 3 représente une vue de derrière de la même partie de la machine dans une position partiellement repliée,
- la figure 4 représente une vue de derrière de la machine complète en position de transport,
- la figure 5 représente une vue de détail d'un exemple de réalisation d'un dispositif d'amortissement,
- la figure 6 représente une vue de détail d'un autre exemple de réalisation d'un dispositif d'amortissement.

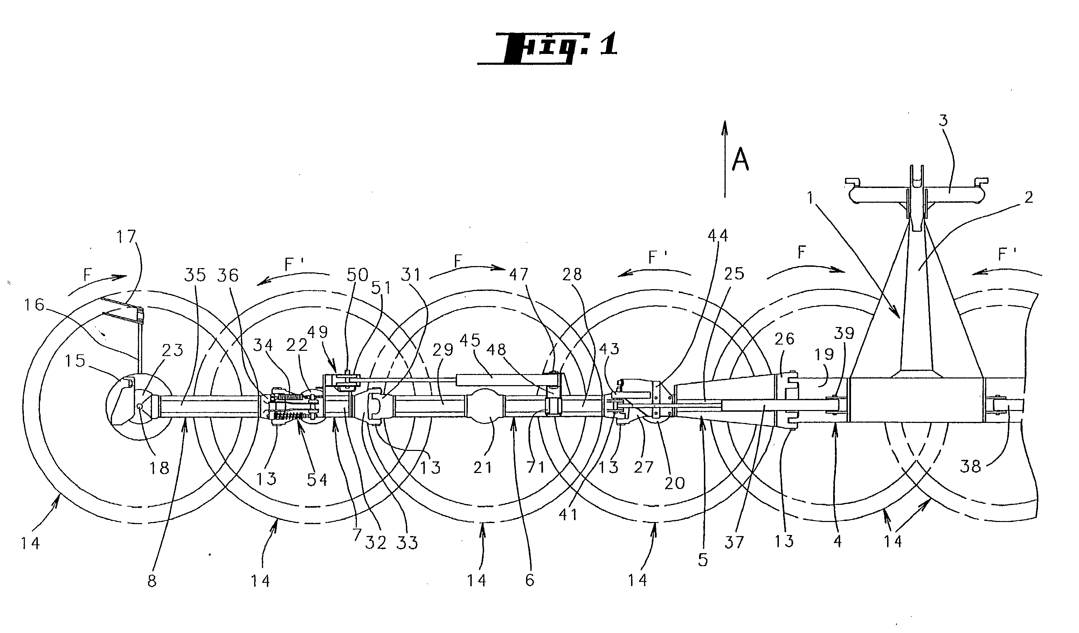

Sur les figures 1 à 3, seule la partie gauche de la machine est entièrement représentée pour une meilleure clarté. On comprendra que la partie droite est symétrique et présente les mêmes caractéristiques. Cette machine comporte un châssis (1) pouvant être accouplé à un tracteur servant à l'animer et à la déplacer dans la direction (A). A cet effet, le châssis (1) possède une poutre (2) qui porte à son extrémité avant un dispositif d'accouplement (3). Ce châssis (1) se compose par ailleurs d'un tronçon central (4) et de quatre tronçons latéraux (5 à 8 et 9 à 12) de chaque côté dudit tronçon central (4). Au total, le châssis (1) comprend huit tronçons latéraux. Ce nombre peut varier en fonction de la largeur recherchée pour la machine. Selon leur position par rapport au tronçon central (4), ces tronçons latéraux (5 à 12) sont appelés ci-après premiers, deuxièmes, troisièmes et quatrièmes tronçons latéraux. La poutre (2) est fixée au tronçon central (4). Les tronçons (4 à 12) sont articulés entre eux au moyen d'axes d'articulation (13) qui sont sensiblement horizontaux et dirigés dans la direction d'avancement (A).

Le tronçon central (4) comporte deux rotors (14) et chaque tronçon latéral (5 à 12) porte un seul rotor (14). Chacun de ces rotors (14) est constitué par un moyeu (15) sur lequel sont fixés plusieurs bras (16) portant des fourches de travail (17) à leurs extrémités libres. Chacun de ces moyeux (15) est monté de manière à pouvoir tourner sur un axe support (18). Celui-ci est sensiblement vertical ou incliné dans la direction d'avancement (A). Les axes supports (18) sont montés dans des paliers prévus dans des boîtiers (19 à 23) des tronçons (4 à 12) respectifs. Chacun de ces axes supports (18) porte à son extrémité inférieure une ou deux roues (24) qui roulent sur le sol durant le travail.

Les rotors (14) peuvent être entraînés en rotation autour de leurs axes supports (18) au moyen d'arbres de transmission qui sont logés dans les tronçons (4 à 12). A cet effet, ces arbres de transmission comportent des pignons d'entraînement qui engrènent avec des couronnes dentées solidaires des moyeux (15) des rotors (14). Ces pignons d'entraînement et ces couronnes dentées se situent dans les boîtiers (19 à 23) desdits tronçons (4 à 12). Au niveau des axes d'articulation (13) entre ces tronçons (4 à 12), lesdits arbres de transmission sont reliés entre eux par des dispositifs d'accouplement à cardans ou à doigts. Ces dispositifs d'accouplement permettent aux arbres de transmission de pivoter avec leurs tronçons (4 à 12) respectifs autour de leurs axes d'articulation (13).

L'arbre de transmission qui est logé dans le tronçon central (4) comporte dans un carter (65) un pignon d'entraînement supplémentaire. Celui-ci est en prise avec un pignon qui est solidaire d'un arbre de transmission qui s'étend hors dudit carter (65). Cet arbre de transmission peut être relié à un arbre de prise de force du tracteur au moyen d'un arbre à cardans.

Chaque premier tronçon latéral (5, 9) se compose d'un tube (25), d'un boîtier (20) qui se situe au-dessus du rotor (14) correspondant et de deux embouts d'articulation (26 et 27) situés à ses extrémités. Chaque deuxième tronçon latéral (6, 10) se compose de deux tubes (28 et 29), d'un boîtier (21) qui se situe au-dessus du rotor (14) correspondant et qui relie les deux tubes (28 et 29) entre eux et de deux embouts d'articulation (30 et 31) situés à ses extrémités. Chaque troisième tronçon latéral (7, 11) se compose d'un tube (32), d'un boîtier (22) qui se situe au-dessus du rotor (14) correspondant et de deux embouts d'articulation (33 et 34) qui se situent aux extrémités. Chaque quatrième tronçon latéral (8, 12) qui se situe à une extrémité du châssis (1) se compose d'un tube (35), d'un boîtier (23) qui se situe au-dessus du rotor (14) correspondant et d'un embout d'articulation (36).

De chaque côté du tronçon central (4) est accroché un premier vérin hydraulique (37, 38) qui relie ledit tronçon central (4) au deuxième tronçon latéral (6, 10). L'accrochage de chaque premier vérin hydraulique (37, 38) au tronçon central (4) est effectué au moyen d'un axe d'articulation (39) qui est logé dans des orifices oblongs de deux plaques parallèles (40) qui sont solidaires du tronçon central (4). L'accrochage de chaque premier vérin hydraulique (37, 38) au deuxième tronçon latéral (6, 10) est assuré à l'aide d'un axe d'articulation (41) qui est engagé dans des trous cylindriques prévus dans deux pattes parallèles (42) solidaires de l'embout d'articulation (30) correspondant. Sur chaque axe (41) est en sus articulé un arrêt (43) en forme de tige. L'extrémité libre de cet arrêt (43) coopère avec une butée (44) prévue sur le boîtier (20) du premier tronçon latéral (5, 9). Cette butée (44) et cet arrêt (43) permettent de limiter l'angle de pivotement vers le haut du second tronçon latéral (6, 10) par rapport au premier tronçon latéral (5, 9). Le tronçon central (4) comporte des butées (52 et 53) qui limitent l'angle de pivotement vers le haut des premiers tronçons latéraux (5, 9).

De chaque côté du tronçon central (4) est prévu un second vérin hydraulique (45, 46) qui relie le deuxième tronçon latéral (6, 10) au troisième tronçon latéral (7, 11). Il est articulé sur le deuxième tronçon latéral (6, 10) au moyen d'un axe (47) qui est logé dans des trous cylindriques de deux pattes parallèles (48) solidaires dudit tronçon (6, 10). La liaison entre chaque deuxième vérin hydraulique (45, 46) et le troisième tronçon latéral (7, 11) correspondant est réalisée à travers des moyens (49) qui assurent un important bras de levier audit vérin hydraulique (45, 46) à la fois lors du repliage en position de transport et du retour en position de travail. Ces moyens (49) comprennent un tourillon (50) qui est solidaire du vérin hydraulique (45, 46). Ce tourillon (50) est guidé au moyen d'un disque excentré de telle sorte qu'il se déplace dans des fentes prévues dans des plaques (51) qui sont fixées sur le troisième tronçon latéral (7, 11), durant la transposition des troisièmes et quatrièmes tronçons latéraux (7, 11 et 8, 12). Ce tourillon (50) maintient alors le vérin hydraulique (45, 46) éloigné de l'axe d'articulation (13) du troisième tronçon latéral (7, 11) à la fois dans la position de travail et dans la position de transport.

Les premiers et deuxièmes vérins hydrauliques (37, 38 et 45, 46) sont de préférence à double effet. Ils sont reliés au circuit hydraulique du tracteur et sont actionnés à partir de celui-ci.

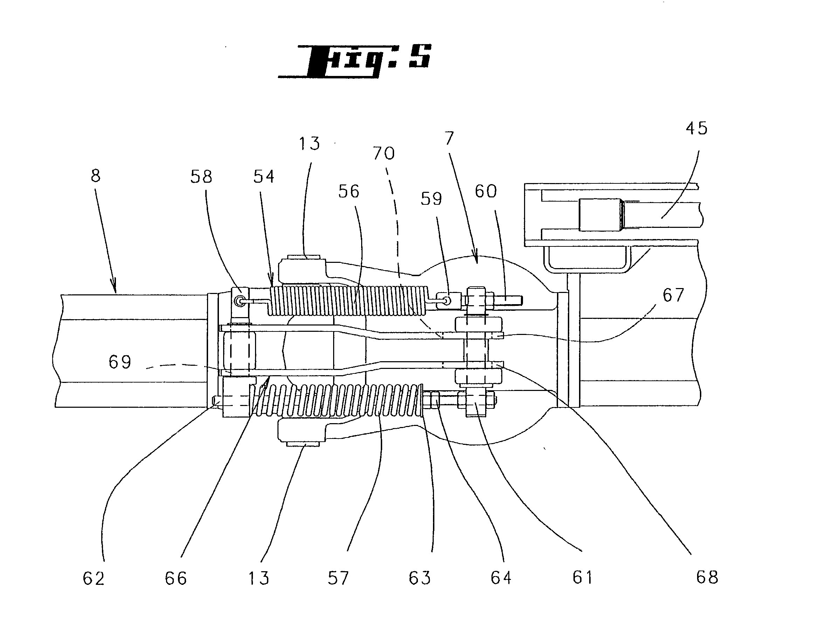

Aucun vérin hydraulique n'est relié aux quatrièmes tronçons latéraux (8, 12). Ceux-ci pivotent librement autour de leurs axes d'articulation (13) lors du repliage et du dépliage. Au niveau de ces axes d'articulation (13) entre les troisièmes et quatrièmes tronçons latéraux (7, 11 et 8, 12) sont montés des dispositifs (54, 55) d'amortissement des pivotements desdits quatrièmes tronçons latéraux (8, 12). Ces dispositifs d'amortissement (54, 55) sont reliés aux deux tronçons latéraux voisins (7 et 8, 11 et 12) et passent au-dessus de leurs axes d'articulation (13) respectifs. Comme cela est représenté sur la figure 5, chaque dispositif d'amortissement (54, 55) se compose d'un ressort de traction (56) et d'un ressort de compression (57). Ces deux ressorts (56 et 57) sont sensiblement parallèles et disposés l'un à côté de l'autre. Le ressort de traction (56) est accroché à un premier axe (58) qui est solidaire du quatrième tronçon latéral (8, 12) et à une plaquette (59) solidaire d'une tige filetée (60) qui est fixée sur un deuxième axe (61) solidaire du troisième tronçon latéral (7, 11). Cette tige filetée (60) permet de régler la tension du ressort de traction (56). Ce ressort (56) agit essentiellement durant le dépliage du tronçon latéral (8, 12). Le ressort de compression (57) est monté sur une tige de guidage (62) qui traverse le premier axe (58) et qui est fixée sur le deuxième axe (61). Cette tige (62) porte en sus une rondelle (63) et des écrous de blocage (64) qui permettent de régler la pression du ressort (57) qui se situe entre cette rondelle (63) et le premier axe (58). Ce ressort (57) agit ainsi essentiellement durant le repliage du tronçon latéral (8, 12).

Les dispositifs d'amortissement (54, 55) comportent un moyen (66) de limitation des déplacements des tronçons latéraux (8 et 12) autour de leurs axes d'articulation (13). Ce moyen de limitation (66) est constitué par deux barres (67 et 68) situées entre les ressorts (56 et 57). Chaque barre (67, 68) comporte un trou cylindrique (69) avec lequel elle est montée sur le premier axe (58) solidaire du quatrième tronçon latéral (8, 12) et un trou oblong (70) avec lequel elle est montée sur le deuxième axe (61) solidaire du troisième tronçon latéral (7, 11). Lesdites barres (67 et 68) se déplacent avec les quatrièmes tronçons latéraux (8, 12) lorsque ceux-ci pivotent autour de leurs axes d'articulation (13). Les extrémités des trous oblongs (70) limitent lesdits pivotements lorsqu'elles butent contre le deuxième axe (61).

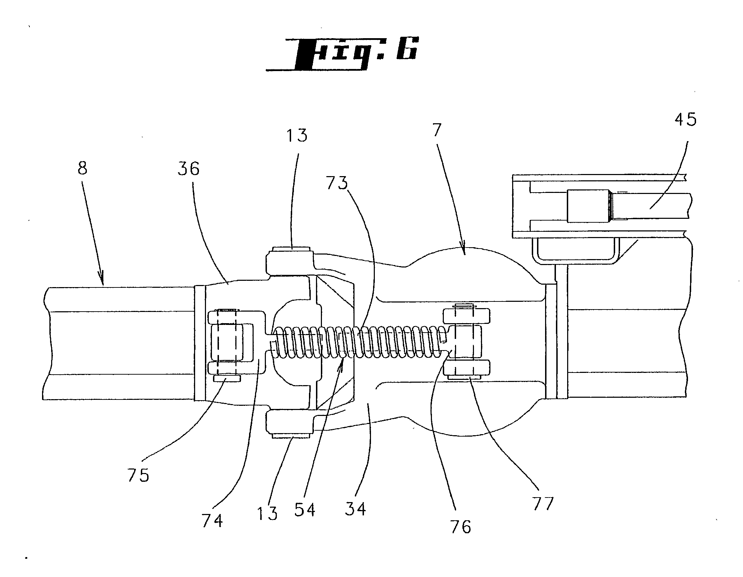

Chaque dispositif d'amortissement (54, 55) peut aussi comporter un seul ressort (73) agencé de manière à travailler à la compression et à la traction (voir figure 6). Ce ressort (73) est fixé à l'une de ses extrémités sur une tige (74) qui est articulée sur le quatrième tronçon latéral (8, 12) au moyen d'un axe (75). A son autre extrémité il est fixé sur une deuxième tige (76) qui est articulée sur le troisième tronçon latéral (7, 11) au moyen d'un axe (77). Ces deux tiges (74 et 76) assurent un guidage du ressort (73). Entre elles il est prévu un jeu qui permet au ressort (73) de se comprimer d'une certaine valeur lors du repliement. En sus, elles limitent l'angle de repliement lorsqu'elles se rencontrent. L'angle de dépliage peut être limité avec des butées prévues sur les côtés inférieurs des embouts d'articulation (34 et 36) des troisièmes et quatrièmes tronçons latéraux (7, 11 et 8, 12).

Bien que cela n'est pas représenté, il est possible de monter un dispositif d'amortissement (54, 55) au niveau de chaque articulation (13) entre les différents tronçons (4 à 12).

Chaque deuxième tronçon latéral (6, 10) comporte sur sa poutre (28) un appui (71, 72) pour le quatrième tronçon latéral (8, 12) en position repliée pour le transport.

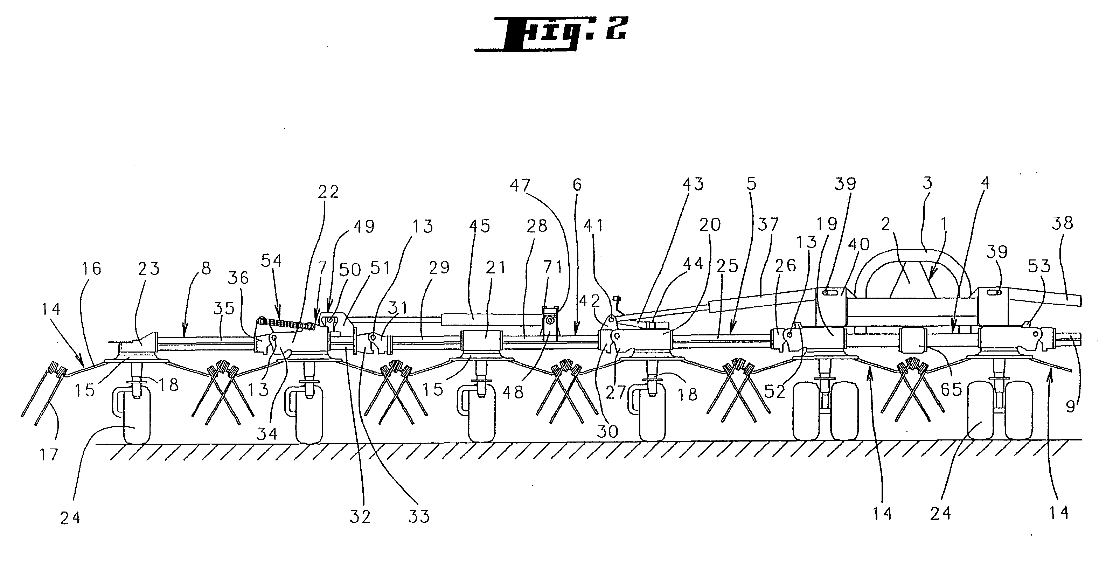

Dans la position de travail, la machine selon l'invention occupe la position représentée sur les figures 1 et 2. Elle est alors accouplée à un tracteur et peut être déplacée à l'aide de celui-ci dans le sens de la flèche (A). Tous les tronçons latéraux (5 à 12) sont déployés et sont portés par les roues (24) qui reposent sur le sol. Les rotors (14) sont entraînés en rotation autour des axes supports (18) de manière à tourner deux à deux en convergence à l'avant (flèches F et F').

Leurs fourches (17) ramassent alors les produits, par exemple des brins d'herbe coupés se trouvant au sol, les déplacent vers l'arrière et les étalent à nouveau tout en provoquant leur retournement. Les différents rotors (14) peuvent suivre les dénivellations du sol en pivotant avec les tronçons (4 à 12) autour des axes d'articulation (13) de ces derniers. Leurs pivotements vers le bas sont limités par les extrémités inférieures des embouts d'articulation (26, 27, 30, 31, 33, 34 et 36).

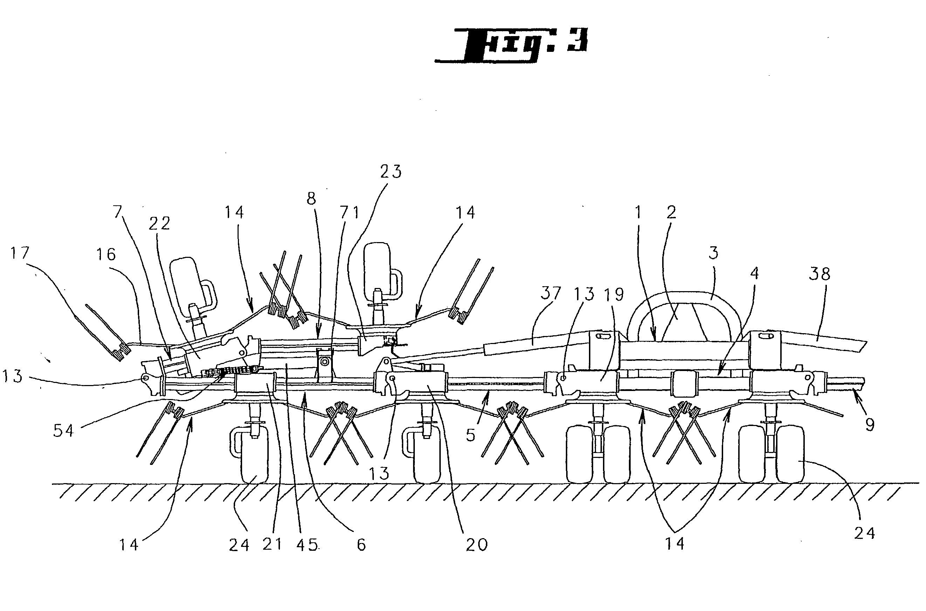

Pour transposer cette machine dans la position de transport, l'entraînement en rotation des rotors (14) est arrêté. Les deuxièmes vérins hydrauliques (45, 46) sont actionnés de telle sorte qu'ils se rétractent. Ceux-ci tirent alors sur les troisièmes tronçons latéraux (7, 11) et font pivoter ensemble ces derniers et les quatrièmes tronçons latéraux (8, 12) autour des axes d'articulation (13) avec les deuxièmes tronçons latéraux (6, 7), dans la position représentée sur la figure 3. Dans cette position, les troisièmes et les quatrièmes tronçons latéraux (7, 11 et 8, 12) ont été repliés d'un angle de près de 180°. Les quatrièmes tronçons latéraux (8, 12) reposent alors sur les appuis (71, 72). Durant ledit repliement, les quatrièmes tronçons latéraux (8, 12) pivotent librement par rapport aux troisièmes tronçons latéraux, autour de leurs axes d'articulation (13), notamment après avoir passé la position verticale. Ces pivotements sont amortis par les dispositifs d'amortissement (54, 55). Dans l'exemple selon la figure 5, le ressort (57) se comprime jusqu'à ce que les extrémités des trous oblongs (70) dans les barres (67, 68) butent contre les deuxièmes axes (61). Dans l'exemple selon la figure 6 le ressort (73) se comprime jusqu'à ce que les deux tiges (74 et 76) se rencontrent.

En sus, durant le repliement décrit ci-dessus les tourillons (50) des vérins hydrauliques (45, 46) se déplacent dans les orifices prévus dans les plaques (51). Dans la position repliée, ces tourillons (50) se situent dans les extrémités desdits orifices qui sont opposées à celles dans lesquelles ils se situaient au départ de la transposition. Ils se retrouvent ainsi de nouveau à une certaine distance au-dessus des axes d'articulation (13) entre les deuxièmes et les troisièmes tronçons latéraux (6, 10 et 7, 11). Ceci permettra aux vérins hydrauliques (45 et 46) de pousser avec un important bras de levier sur les troisièmes tronçons latéraux (7, 11) lors du retour en position de travail.

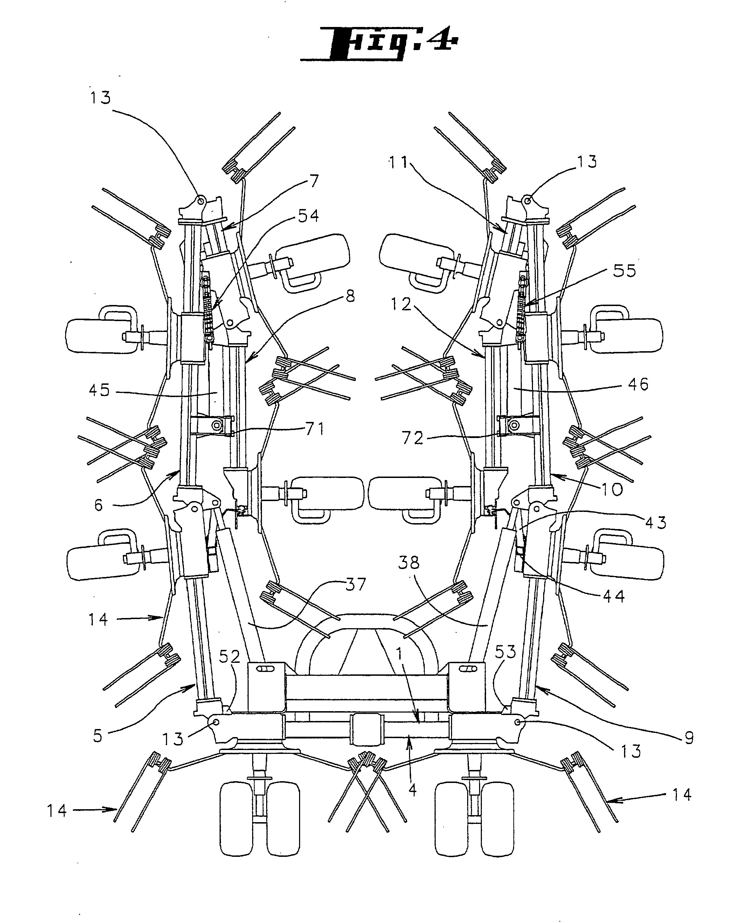

Après le repliement précité des troisièmes et quatrièmes tronçons latéraux (7, 11 et 8, 12), les premiers vérins hydrauliques (37, 38) sont actionnés de sorte qu'ils se rétractent. Ils tirent sur les deuxièmes tronçons latéraux (6, 10) et les font pivoter autour de leurs axes d'articulation (13) avec les premiers tronçons latéraux (5, 9). Les troisièmes et quatrièmes tronçons latéraux (7, 11 et 8, 12) se déplacent alors avec les deuxièmes tronçons latéraux (6, 10). Le pivotement des deuxièmes tronçons latéraux (6, 10) s'effectue jusqu'à ce que leurs arrêts (43) rencontrent les butées (44) solidaires des premiers tronçons latéraux (5, 9). L'angle de pivotement obtenu est d'environ 7°. Les butées (44) bloquent alors les deuxièmes tronçons latéraux (6, 10) par rapport aux premiers tronçons latéraux (5, 9). Ensuite, les premiers vérins hydrauliques (37, 38) font pivoter l'ensemble des tronçons latéraux (5 à 12) autour des axes d'articulation (13) avec le tronçon central (4). L'angle de pivotement autour de ces axes d'articulation est proche de 90°. Dans la nouvelle position les tronçons latéraux (5 à 12) sont sensiblement verticaux, les premiers et deuxièmes tronçons latéraux (5, 9 et 6, 10) étant dirigés vers le haut et les troisièmes et quatrièmes tronçons latéraux (7, 11 et 8, 12) étant dirigés vers le bas à partir de leurs axes d'articulation (13) respectifs (voir figure 4). Ces tronçons latéraux (5 à 12) peuvent éventuellement être immobilisés dans cette position au moyen de verrous mécaniques associés aux vérins hydrauliques (37, 38). La largeur de la machine est ainsi très réduite sans que pour autant sa longueur soit augmentée. De ce fait, cette position est idéale pour le transport.

Pour ramener la machine dans la position de travail, les premiers vérins hydrauliques (37, 38) sont actionnés pour qu'ils s'allongent. Les tronçons latéraux (5 à 12) pivotent vers le bas jusqu'à ce que les roues (24) des rotors (14) des premiers et deuxièmes tronçons latéraux (5, 9 et 6, 10) reposent sur le sol. Ensuite, les deuxièmes vérins hydrauliques (45, 46) sont actionnés pour qu'ils s'allongent. Ceux-ci poussent les troisièmes et quatrièmes tronçons latéraux (7, 11 et 8, 12) vers l'extérieur et les font pivoter autour des axes d'articulation (13) avec les deuxièmes tronçons latéraux (6, 10). Les ressorts (56 ou 73) des dispositifs (54, 55) amortissent le pivotement des quatrièmes tronçons latéraux (8, 12) autour de leurs axes (13) avec les troisièmes tronçons latéraux (7, 11) lorsqu'ils ont passé la position verticale. Ce pivotement est arrêté lorsque les extrémités des orifices oblongs (70) des barres (67, 68) butent contre les deuxièmes axes (61) ou lorsque les butées des embouts (34 et 36) se rencontrent. Durant ce dépliage des troisièmes et quatrièmes tronçons latéraux (7, 11 et 8, 12), les tourillons (50) des deuxièmes vérins hydrauliques (45, 46) se déplacent vers le haut dans les fentes des plaques (51) de sorte qu'ils se situent à nouveau à une certaine distance au-dessus des axes d'articulation (13). Lorsque tous les tronçons (4 à 12) sont à nouveau alignés, les rotors (14) peuvent être entraînés en rotation tel que décrit précédemment.

Il est bien évident que l'invention n'est pas limitée aux modes de réalisation décrits et représentés sur les dessins annexés. Des modifications restent possibles, notamment en ce qui concerne la constitution des divers éléments ou par substitution d'équivalents techniques, sans sortir pour autant du domaine de protection tel que défini dans les revendications.

## Revendications

1. Machine de fenaison, notamment une faneuse, comportant un châssis (1) pouvant être accouplé à un tracteur, lequel châssis (1) se compose d'un tronçon central (4) et de plusieurs tronçons latéraux (5 à 12) qui sont articulés entre eux et qui portent des rotors (14) montés sur des axes supports (18) autour desquels ils peuvent être entraînés en rotation au moyen d'organes de transmission qui sont logés dans les tronçons (4 à 12) du châssis (1), lesdits tronçons latéraux (5 à 12) pouvant être transposés au moyen de vérins hydrauliques (37, 38, 45, 46) dans une position de travail dans laquelle ils sont sensiblement alignés et dans une position de transport dans laquelle ils sont repliés autour de leurs axes d'articulation (13), certains de ces tronçons latéraux (8, 12) se repliant et se dépliant librement autour de leurs axes d'articulation (13) durant lesdites transpositions, ***caractérisée par le fait* qu'**elle comporte au niveau des axes d'articulation (13) des tronçons latéraux (8, 12) qui se replient ou se déplient librement, des dispositifs d'amortissement (54, 55) constitués par un ou plusieurs ressorts (56, 57 ; 73) agencés de manière à travailler à la traction et à la compression et qui amortissent les déplacements desdits tronçons latéraux (8, 12) autour de leurs axes d'articulation (13) à la fois au repliage et au dépliage.

2. Machine selon la revendication 1, ***caractérisée par le fait* que** les dispositifs d'amortissement (54, 55) sont reliés aux tronçons latéraux (8, 12) qui se replient ou se déplient librement et aux tronçons latéraux (7, 11) voisins et qu'ils passent au-dessus des axes d'articulation (13) correspondants.

3. Machine selon la revendication 1 ou 2, ***caractérisée par le fait* que** les dispositifs d'amortissement (54, 55) se composent d'un ressort de traction (56) et d'un ressort de compression (57).

4. Machine selon la revendication 3, ***caractérisée par le fait* que** le ressort de traction (56) et le ressort de compression (57) sont sensiblement parallèles et sont disposés l'un à côté de l'autre.

5. Machine selon la revendication 3 ou 4, ***caractérisée par le fait* que** le ressort de traction (56) et le ressort de compression (57) coopèrent avec des axes (58 et 61) sensiblement horizontaux qui sont solidaires des tronçons latéraux (8, 12 et 7, 11) voisins.

6. Machine selon l'une quelconque des revendications 3 à 5, ***caractérisée par le fait* que** la tension des ressorts de traction et de compression (56, 57) est réglable.

7. Machine selon l'une quelconque des revendications précédentes, ***caractérisée par le fait* que** chaque dispositif d'amortissement (54, 55) comporte un moyen (66) de limitation des déplacements des tronçons latéraux (8, 12) correspondants autour de leurs axes d'articulation (13).

8. Machine selon la revendication 7, ***caractérisée par le fait* que** le moyen de limitation (66) est constitué par au moins une barre (67, 68) liée aux deux tronçons latéraux (8, 12 et 7, 11) voisins.

9. Machine selon la revendication 8, ***caractérisée par le fait* que** la barre (67, 68) comporte un orifice cylindrique (69) au moyen duquel elle est montée sur un premier axe (58) solidaire d'un des tronçons latéraux (8, 12 et 7, 11) voisins et un orifice oblong (70) au moyen duquel elle est montée sur un deuxième axe (61) solidaire de l'autre desdits tronçons latéraux (8, 12 et 7, 11) voisins.

10. Machine selon la revendication 1 ou 2, ***caractérisée par le fait* que** les dispositifs d'amortissement (54, 55) se composent d'un seul ressort (73) agencé de manière à travailler à la compression et à la traction.

11. Machine selon la revendication 10, ***caractérisée par le fait* que** le ressort (73) est fixé à chacune de ses extrémités sur une tige de guidage (74, 76).

12. Machine selon la revendication 11, ***caractérisée par le fait* que** les tiges de guidage (74 et 76) sont articulées respectivement sur les quatrièmes tronçons latéraux (8, 12) et les troisièmes tronçons latéraux (7, 11) et qu'elles limitent le repliement desdits quatrièmes tronçons latéraux (8, 12) autour de leurs axes d'articulation (13).

## Patentansprüche

1. Heuwerbungsmaschine, insbesondere Wender, mit einem an einen Traktor ankuppelbaren Rahmen (1), der aus einem Mittelabschnitt (4) und mehreren Seitenabschnitten (5 bis 12) besteht, die aneinander angelenkt sind und Rotoren (14) tragen, die auf Stützachsen (18) angebracht sind, um die sie mittels in den Abschnitten (4 bis 12) des Rahmens (1) untergebrachten Übertragungselementen drehangetrieben werden können, wobei die Seitenabschnitte (5 bis 12) mittels Hydraulikzylindern (37, 38, 45, 46) in eine Arbeitsstellung, in der sie im Wesentlichen aufeinander ausgerichtet sind, und in eine Transportstellung, in der sie um ihre Gelenkachsen (13) zusammengeklappt sind, umgestellt werden können, wobei gewisse dieser Seitenabschnitte (8, 12) bei diesen Umstellungen frei um ihre Gelenkachsen (13) zusammen- und auseinandergeklappt werden können, ***dadurch gekennzeichnet,* dass** sie im Bereich der Gelenkachsen (13) der Seitenabschnitten (8, 12), die frei zusammen- und auseinandergeklappt werden können, Dämpfungsvorrichtungen (54, 55) aufweist, die aus einer oder mehreren Federn (56, 57; 73) bestehen, die so angeordnet sind, dass sie unter Zug und unter Druck wirken, und die die Verschiebungen der Seitenabschnitte (8, 12) um ihre Gelenkachsen (13) sowohl beim Zusammenals auch beim Auseinanderklappen dämpfen.

2. Maschine nach Anspruch 1, ***dadurch gekennzeichnet,* dass** die Dämpfungsvorrichtungen (54, 55) mit den frei zusammen- und auseinanderklappbaren Seitenabschnitten (8, 12) und mit den benachbarten Seitenabschnitten (7, 11) verbunden sind und dass sie sich über den entsprechenden Gelenkachsen (13) erstrecken.

3. Maschine nach Anspruch 1 oder 2, ***dadurch gekennzeichnet,* dass** die Dämpfungsvorrichtungen (54, 55) aus einer Zugfeder (56) und einer Druckfeder (57) bestehen.

4. Maschine nach Anspruch 3, ***dadurch gekennzeichnet,* dass** die Zugfeder (56) und die Druckfeder (57) im Wesentlichen parallel verlaufen und nebeneinander angeordnet sind.

5. Maschine nach Anspruch 3 oder 4, ***dadurch gekennzeichnet,* dass** die Zugfeder (56) und die Druckfeder (57) mit im Wesentlichen horizontalen Achsen (58 und 61) zusammenwirken, die fest mit den benachbarten Seitenabschnitten (8, 12 und 7, 11) verbunden sind.

6. Maschine nach irgend einem der Ansprüche 3 bis 5, ***dadurch gekennzeichnet,* dass** die Spannung der Zug- und der Druckfeder (56, 57) einstellbar ist.

7. Maschine nach irgend einem der vorhergehenden Ansprüche, ***dadurch gekennzeichnet,* dass** jede Dämpfungsvorrichtung (54, 55) ein Mittel (66) zur Begrenzung der Verschiebungen der entsprechenden Seitenabschnitte (8, 12) um ihre Gelenkachsen (13) aufweist.

8. Maschine nach Anspruch 7, ***dadurch gekennzeichnet,* dass** das Begrenzungsmittel (66) aus mindestens einem Stab (67, 68) besteht, der mit den benachbarten Seitenabschnitten (8, 12 und 7, 11) verbunden ist.

9. Maschine nach Anspruch 8, ***dadurch gekennzeichnet,* dass** der Stab (67, 68) eine zylindrische Öffnung (69), mittels der er an einer fest mit einem der benachbarten Seitenabschnitten (8, 12 und 7, 11) verbundene erste Achse (58) angebracht ist, und eine längliche Öffnung (70), mittels der er an einer fest mit dem anderen der benachbarten Seitenabschnitten (8, 12 und 7, 11) verbundene zweite Achse (61) angebracht ist, aufweist.

10. Maschine nach Anspruch 1 oder 2, ***dadurch gekennzeichnet,* dass** die Dämpfungsvorrichtungen (54, 55) aus einer einzigen Feder (73) bestehen, die so angeordnet ist, dass sie unter Druck und unter Zug wirken kann.

11. Maschine nach Anspruch 10, ***dadurch gekennzeichnet,* dass** die Feder (73) an jedem ihrer Enden an einer Führungsstange (74, 76) befestigt ist.

12. Maschine nach Anspruch 11, ***dadurch gekennzeichnet,* dass** die Führungsstangen (74 und 76) jeweils an den vierten Seitenabschnitten (8, 12) und den dritten Seitenabschnitten (7, 11) angelenkt sind und das Zusammenklappen der vierten Seitenabschnitte (8, 12) um ihre Gelenkachsen (13) begrenzen.

## Claims

1. Haymaking machine, particularly a tedder, comprising a chassis (1) that can be coupled to a tractor, which chassis (1) is made up of a central section (4) and several lateral sections (5 to 12) which are articulated to one another and bear rotors (14) mounted on support axes (18) about which they can be driven in rotation by transmission elements which are housed in the sections (4 to 12) of the chassis (1), it being possible for the said lateral sections (5 to 12) to be transposed using hydraulic rams (37, 38, 45, 46) into a work position in which they are substantially aligned and into a transport position in which they are folded about their articulation axes (13), some of these lateral sections (8, 12) folding and unfolding freely about their articulation axes (13) during the said transpositions, ***characterized in* that** it comprises, at the level of the articulation axes (13) of the lateral sections (8, 12) which fold or unfold freely, damping devices (54, 55) consisting of one or several springs (56, 57; 73) arranged in such a way as to work in tension and in compression and which damp the displacements of the said lateral sections (8, 12) about their articulation axes (13) both during folding and during unfolding.

2. Machine according to Claim 1, ***characterized in* that** the damping devices (54, 55) are connected to the lateral sections (8, 12) which fold or unfold freely and to the adjacent lateral sections (7, 11) and **in that** they pass over the corresponding articulation axes (13).

3. Machine according to Claim 1 or 2, ***characterized in* that** the damping devices (54, 55) are made up of a tension spring (56) and of a compression spring (57).

4. Machine according to Claim 3, ***characterized in* that** the tension spring (56) and the compression spring (57) are substantially parallel and are arranged one beside the other.

5. Machine according to Claim 3 or 4, ***characterized in* that** the tension spring (56) and the compression spring (57) cooperate with substantially horizontal axes (58 and 61) which are secured to the adjacent lateral sections (8, 12 and 7, 11).

6. Machine according to any one of Claims 3 to 5, ***characterized in* that** the tension in the tension and compression springs (56, 57) is adjustable.

7. Machine according to any one of the preceding claims, ***characterized in* that** each damping device (54, 55) comprises a means (66) of limiting the displacements of the corresponding lateral sections (8, 12) about their articulation axes (13).

8. Machine according to Claim 7, ***characterized in* that** the limiting means (66) consists of at least one bar (67, 68) connected to the two adjacent lateral sections (8, 12 and 7, 11).

9. Machine according to Claim 8, ***characterized in* that** the bar (67, 68) comprises a cylindrical orifice (69) by means of which it is mounted on a first axis (58) secured to one of the adjacent lateral sections (8, 12 and 7, 11) and an oblong orifice (70) by means of which it is mounted on a second axis (61) secured to the other of the said adjacent lateral sections (8, 12 and 7, 11).

10. Machine according to Claim 1 or 2, ***characterized in* that** the damping devices (54, 55) are made up of one single spring (73) arranged to work in compression and in tension.

11. Machine according to Claim 10, ***characterized in* that** the spring (73) is fixed at each of its ends to a guide rod (74, 76).

12. Machine according to Claim 11, ***characterized in* that** the guide rods (74 and 76) are articulated respectively to the fourth lateral sections (8, 12) and the third lateral sections (7, 11) and **in that** they limit the folding of the said fourth lateral sections (8, 12) about their articulation axes (13).
